# EUROPÄISCHE PATENTSCHRIFT

(11) **EP 2 059 991 B1**
(45) Veröffentlichungstag und Bekanntmachung des Hinweises auf die Patenterteilung: **16.12.2009**
(21) Anmeldenummer: 07786111.0
(22) Anmeldetag: 17.07.2007
(51) Int. Cl.: H02K 3/32

(54) **SPULENTRÄGERVORRICHTUNG**
COIL FORMER APPARATUS
DISPOSITIF PORTE-BOBINE

(30) Priorität: 06.09.2006 DE 102006041715
(43) Veröffentlichungstag der Anmeldung: 20.05.2009
(73) Patentinhaber: WILO SE, 44263 Dortmund (DE)
(72) Erfinder: MATERNE, Thomas, 59348 Lüdinghausen (DE); STRELOW, Günter, 44801 Bochume (DE); DREIHAUS, Uwe, 59067 Hamm (DE); HOHEISEL, Stephan, 44287 Dortmund (DE)
(74) Vertreter: COHAUSZ DAWIDOWICZ HANNIG & SOZIEN
(86) Internationale Anmeldenummer: PCT/EP2007/006311
(87) Internationale Veröffentlichungsnummer: WO 2008/028536

(56) Entgegenhaltungen:
- DE-A1- 2 843 006
- US-A- 6 081 059

## Beschreibung

Die Erfindung betrifft eine Spulenträgenrorrichtung für eine elektrische Maschine insbesondere für einen Elektromotor mit Spulenträgern aus Kunststoff, auf denen Spulen des Stators wickelbar sind. Eine solche Spulen trägervorrichtung ist aus der US 6081059, bekannt.

Es sind verschiedene Verfahren zum Bewickeln von Spulenträgern und deren Montage in Elektromotoren bekannt. Hierbei werden Einzelspulen auf einzelnen Polschenkeln angeordnet. Dies ist arbeits- und kostenaufwendig und erschwert eine Großserienfertigung.

Aufgabe der Erfindung ist es, Fertigung und Montage von elektrischen Maschinen zu vereinfachen und eine Serienanfertigung zu erleichtern.

Diese Aufgabe wird erfindungsgemäß dadurch gelöst, dass die Spulenträger über Scharniere insbesondere Filmscharniere am äußeren Rand eines mittigen Kunststoff-Trägerelements angelenkt insbesondere angeformt sind.

Hierdurch sind die Spulenträger für ein Bewickeln besonders gut für Bewicklungs- und Montagemaschinen zugänglich und die Spulenträger sind von vornherein miteinander verbunden. Wahlweise können die Spulenträger einzeln oder paarweise bewickelt werden, wobei die Spulenträger stets sichere definierte Stellungen einnehmen. Auch kann das mittige Trägerelement neben seiner Haltefunktion zusätzlich Aufgaben insbesondere auf elektrischen/elektronischen Gebieten übernehmen. Die Anzahl der Teile ist wesentlich verringert und die Herstellungssicherheit und die Fertigungsgenauigkeit erhöht. Es ist nur ein Trägerelement erforderlich und es wird eine einzige, leicht prüfbare Einheit geschaffen.

Vorteilhafte Ausgestaltungen der Erfindung sind in den Unteransprüchen aufgeführt.

Ein Ausführungsbeispiel der Erfindung mit vier Spulenträgern ist in den Zeichnungen perspektivisch dargestellt und wird im Folgenden näher beschrieben. Es zeigen:

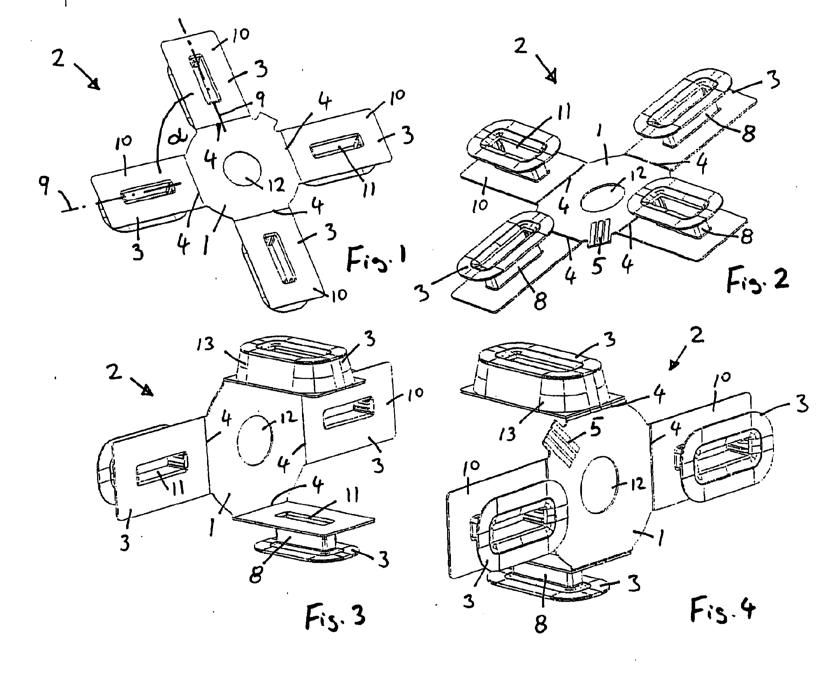

- Fig. 1: eine Oberansicht der Spulenträgervorrichtung mit Spulenträgern in einer Ebene,
- Fig. 2: eine Unteransicht der Spulenträgervorrichtung mit Spulenträgern in einer Ebene,
- Fig. 3: eine Rückansicht der Spulenträgervorrichtung mit einem Paar nach hinten abgebogenen Spulenträgern mit einem bewickelten Spulenträger,
- Fig. 4: eine Vorderansicht der Spulenträgervorrichtung mit einem Paar nach hinten abgebogenen Spulenträgern mit einem bewickelten Spulenträger,

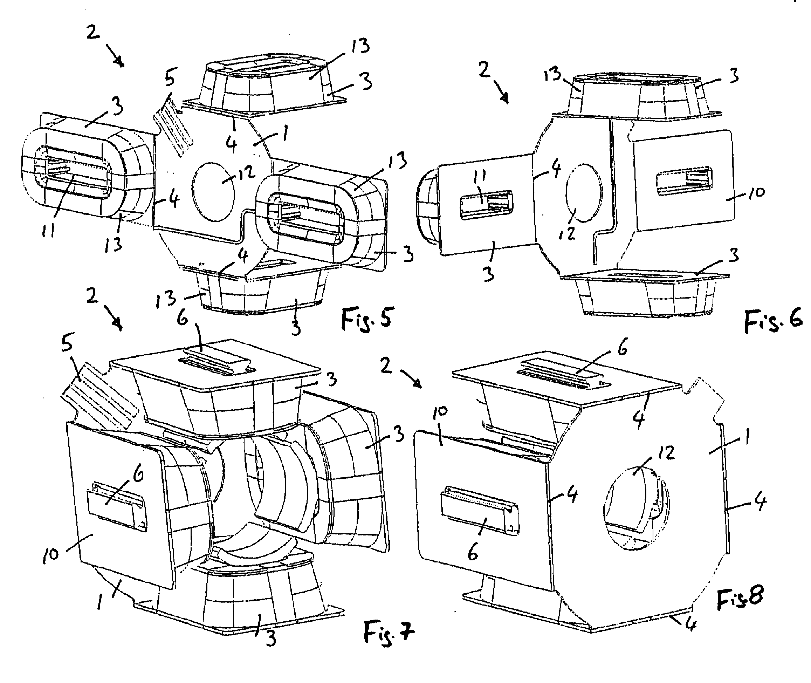

- Fig. 5: eine Rückansicht der Spulenträgervorrichtung mit einem Paar nach hinten abgebogenen Spulenträgern mit einem bewickelten Spulenträger mit vier Bewicklungen bzw. Spulen
- Fig. 6: eine Rückansicht der Spulenträgervorrichtung mit einem zweiten Paar nach hinten abgebogenen Spulenträgern mit einem bewickelten Spulenträger nach einer 180 Grad Drehung der Spule mit vier Bewicklungen bzw. Spulen
- Fig. 7: eine Vorderansicht der Spulenträgervorrichtung mit allen Spulenträgern in Arbeitsstellung mit vier Bewicklungen bzw. Spulen
- Fig. 8: eine Rückansicht der Spulenträgervorrichtung mit allen Spulenträgern in Arbeitsstellung mit vier Bewicklungen bzw. Spulen

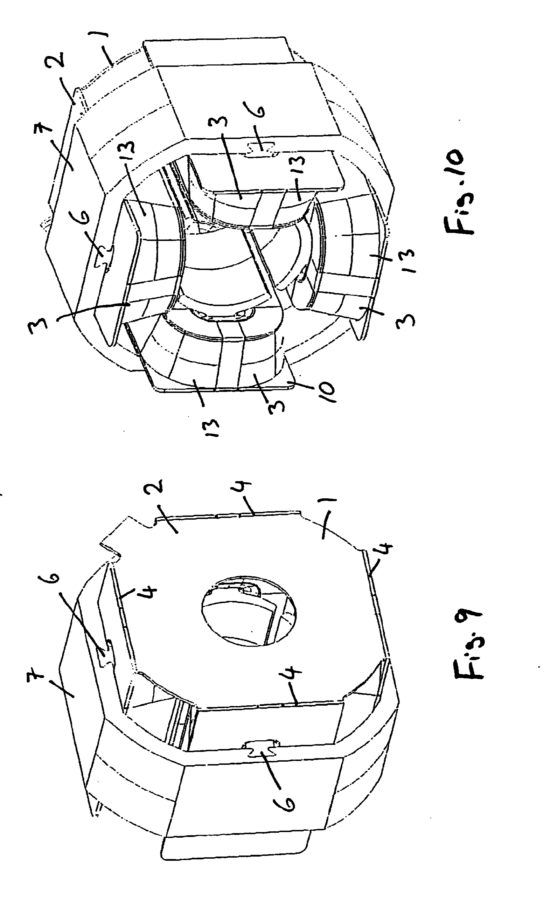

- Fig. 9: eine Rückansicht der Spulenträgervorrichtung nach Fig. 8 mit Rückschlussring,
- Fig. 10: eine Vorderansicht der Spulenträgervorrichtung nach Fig. 8 mit Rückschlussring.

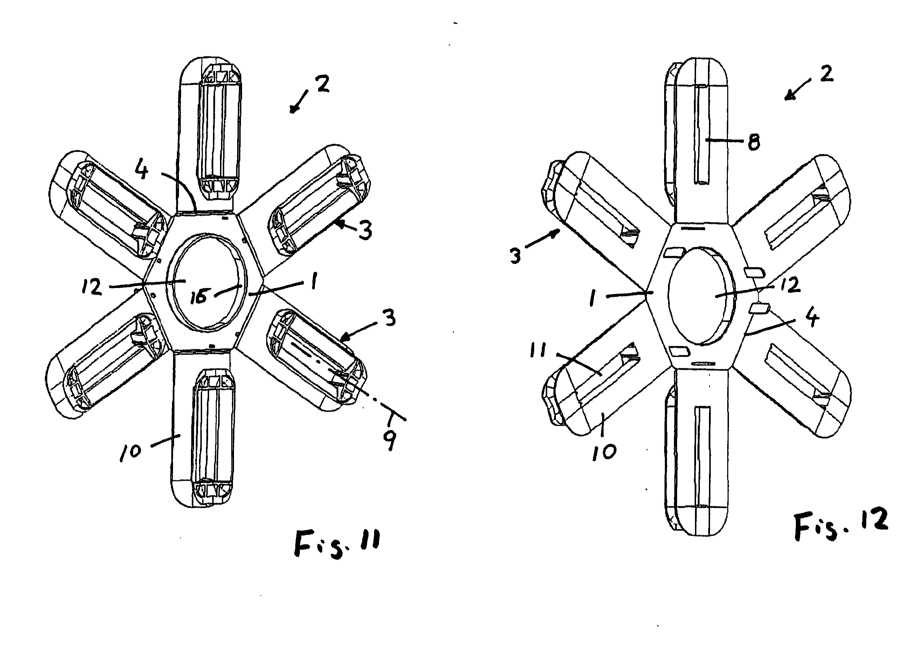

- Fig.11: eine Vorderansicht einer Spulenträgervorrichtung mit sechs Spulenträgern in noch nicht abgewinkelter Stellung,
- Fig. 12: eine Rückansicht einer Spulenträgervorrichtung mit sechs Spulenträgern in noch nicht abgewinkelter Stellung,

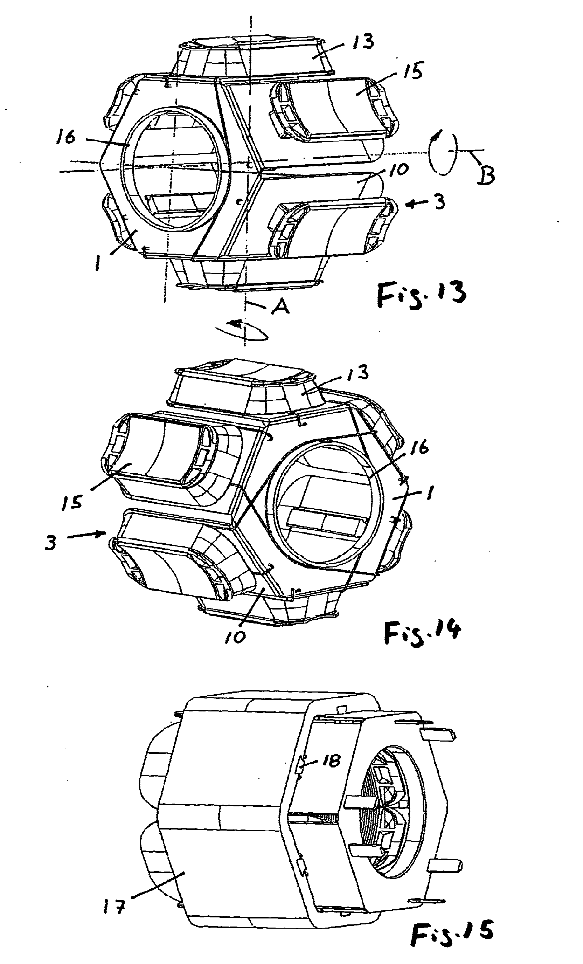

- Fig. 13: eine Spulenträgervorrichtung mit nach außen geklappten Spulenträgern, von denen zwei bewickelt sind,
- Fig. 14: eine Spulenträgervorrichtung mit nach außen geklappten Spulenträgern, die alle bewickelt sind, und
- Fig. 15: eine Spulenträgervorrichtung mit nach innen geklappten bewickelten Spulenträgern.

An einem flächigen Trägerelement 1 einer Spulenträgervorrichtung 2 aus Kunststoff sind Spulenträger 3 aus Kunststoff einstückig angeformt, auf der die einzelnen Spulen 13 eines Stators großseriengerecht bewickelt werden. Der Spulenträger 3 mit seinem hohlen Kunststoffkern 8, auf den der Draht der Spule gewickelt wird, ist länglich ausgeführt, d. h. er besitzt eine größere Länge L als Breite B, wobei seine Längsachse 9 radial zum Trägerelement 1 angeordnet ist. Die einzelnen Spulenträger 3 verteilen sich symmetrisch sternförmig um das mittige Kunststoffträgeretement 1 und sind über Scharniere insbesondere Filmscharniere 4 mit diesem verbunden. Auf dem Trägerelement 1, auf das vorzugsweise über MID-Technologie (Model Interconnect Devices) Leiterbahnen aufgebracht sind, wird die elektrische Verschaltung der einzelnen Spulen zueinander hergestellt. Weiterhin dient diese MID Struktur als Träger und Verschaltungsinstrument für alle bzw. Teile der notwendigen elektrischen/elektronischen Bauteile. Zum Anschluss an elektrische Versorgungs- und/oder Regelungsleitungen sind an geeigneten Stellen am Trägerelement 1 elektrische Anschlüsse 5 befestigt. Damit wird das Trägerelement wie eine Leiterplatte verwendet.

Die Spulenträgervorrichtung 2 besitzt am Trägerelement 1 in der Ebene sternförmig verteilte vier oder mehr Spulenträger 3 als Isolationskörper, auf denen die einzelnen Spulen aufgewickelt werden. Da jeder Spulenträger 3 mit seinem Kunststoffkern 8, auf dem die Wicklungen liegen, eine längliche Form aufweist und seine Längsachse 9 radial zur Mitte der Vorrichtung und des Trägerelements 1 angeordnet ist, ist auch die Ausnehmung 11 von länglicher Form und im noch nicht abgebogenen Zustand radial angeordnet. Der Spulenträger 9 bildet eine Außenplatte 10 mit einer mittigen Öffnung 12 in ihr und im Kern 8. Die Außenplatte 10 liegt in der Ebene des Trägerelements 1 und ist über das Filmscharnier mit dem Trägerelement 1 verbunden.

Abhängig vom Wickelverfahren der zu bewickelnden Spulenträger 3 in der Ebene des Trägerelements 1 (Flyer, Nadelwickler) wird die Vorrichtung 2 um einen bestimmten Winkel im Werkzeug gedreht (Linearwickler). Aus Gründen der Unwucht, ist es von Vorteil, die einander gegenüberliegenden Spulenträger 3 symmetrisch umzubiegen. Nach dem Bewickeln eines Spulenträgers 3 wird der Draht in dafür vorgesehene Führungsbahnen direkt zum gegenüberliegenden Spulenträger 3 weitergeleitet. Der Anfang und das Ende der Spulen werden mit der MID Struktur leitend verbunden. Zum Kontaktieren der Wicklungsenden mit der MID Struktur bieten sich alle bekannten Kontaktarten wie Schneid-Klemm-Technik, Löten, Schweißen, etc. an. Nach dem Bewickeln aller Spulenträger 3 werden diese in ihre endgültige Position gekippt bzw. umgebogen und mit dem metallischen Rückschlussring verbunden.

Die zu bewickelnde Spulenträgervorrichtung 2 wird in ihrer Symmetrieachse mit einer drehbaren Vorrichtung des Wickelwerkzeuges befestigt. Am Rand des Spulenträgers 3 am Übergang zur zentralen MID Struktur wird der zu bewickelnde Spulenträger 3, bzw. aus Symmetriegründen bei hohen Wickelgeschwindigkeiten die gegenüberliegenden bzw. alle Spulenträger, über ein Filmscharnier 4 um einen definierten Winkel in eine geeignete Wickellage mittels des Wickelwerkzeuges gedreht und festgehalten.
In dieser Lage wird der Spulenträger 3 fixiert und mittels eines Flyers, Nadelwicklers bzw. eines Linearwicklers bewickelt. Nach Fertigstellung einer Spule wird die Vorrichtung 2 im Werkzeug derart um ihre Symmetrieachse gedreht, dass der Draht über vorgesehene Drahtführungen zum vorzugsweise gegenüberliegenden Spulenträger 3 hingeleitet wird, um diesen zu bewickeln. Somit ist keine separate Kontaktbrücke zwischen den kurzgeschlossenen Wicklungen erforderlich.

Am Anfang und Ende der Spulen sind Kontaktstellen an der MID Struktur des Trägerelements 1 vorgesehen. Diese dienen zur Kontaktierung zwischen Wicklungsenden und MID Leiterbahn. Die notwendige Kontaktierung wird vorzugsweise schon während des Wickelprozesses realisiert. Somit wird zum Abschluss eine bewickelte Spulenträgervorrichtung 2 mit Elektronik erhalten, die abschließend elektrisch bzw. elektronisch getestet wird. Nach dem Bewickeln aller Spulenträger 3 werden die einzelnen Polschuhe 6 in die Ausnehmungen 11 der Spulenträger 3 geschoben, die Spulenträger in ihre endgültige Lage gedreht und mit dem Rückschlussring 7 komplettiert.

Im Zentrum zwischen den Spulenträgern 3 befindet sich auf dem Trägerelement 1 eine MID Struktur, um die für den Betrieb des Motors notwendige Elektrik/Elektronik, oder Teile dieser funktionsgerecht aufzunehmen. Diese MID Struktur ist je nach Anwendungsfall für Nieder- bzw. Hochspannungsversorgung der Spulen verschieden ausgeführt.

Die zentrale Verschaltungsgeometrie des Trägerelements 1 beinhaltet auch den Netzanschluss des Motors zur Stromversorgung, sowie den elektrischen Anschluss für eine Steuerungs- bzw. Regelungsleitung. Ggf. werden alle Anschlussleitungen in einer Steckerverbindung vereinigt, die vorzugsweise am Rand des Trägerelements angeordnet ist.

Der oben beschriebene Stator mit Elektronik und elektrischem Anschluss wird vorzugsweise mittels eines Kunststoffs umspritzt. Zum Abschluss steht eine Statorbaugruppe zur Verfügung, die mit der Rotorbaugruppe, dem Motoreninsbesondere Pumpengehäuse und ggf. mit weiteren Elektronikmodulen schnell und sicher zu einem Motor insbesondere zu einer Motorpumpe montiert wird.

Im Ausführungsbeispiel sind vier Spulenträger 3 punktsymmetrisch um das mittige Trägerelement 1 angeordnet, so dass die Längsachsen 9 der Spulenträger 3 im noch nicht abgebogenen flachen Zustand der Vorrichtung 2 miteinander Winkel α von 90 Grad bilden. Stattdessen können aber auch sechs, acht oder mehr Spulenträger 3 am mittigen Trägerelement 1 angeformt und punktsymmetrisch angeordnet sein, wobei die Winkel α zwischen den Spulenträgern 3 bzw. deren Längsachsen 9 wiederum gleich groß sind.

Ferner können die Scharniere 4 eine Schnappverbindung aufweisen.

Im Folgenden wird die Funktionsweise einer komplexen automatischen Linearwickelmaschine für die Großserienfertigung beschrieben. Bei kleineren Stückzahlen können einzelne Arbeitsschritte manuell ausgeführt werden.

In einem ersten Arbeitsschritt werden mittels eines Roboters die Spulenträger 3 (Wicklungsträger) mit Polschuhen 15 bestückt und dem Wickelautomaten derart übergeben, dass die zu bewickelnden Spulenträger mit ihren Polschuhen 15 nach außen, mit ihrer Längsachse 9 parallel zur Mittelachse, gerichtet sind. Die Polschuhe 15 besitzen für die Befestigung mit dem Rückschlussring 17 Kontaktgeometrien 18 z. B. Schwalbenschwänze. Diese sind bei der zu bewickelnden Spulenträgervorrichtung 1 zum Zentrum des Trägerelements 1 gerichtet und dienen zur Zentrierung und Befestigung der Spulenträgervorrichtung 1 mit der Wickelmaschine.

Nach der Bestückung der Wickelmaschine mit einer Spulenträgervorrichtung 1 wird diese um die Drehachse A in die Wickelposition geschwenkt. An der Spulenträgervorrichtung 1 sind Kontakte angebracht, die zur elektrischen Verbindung der Spulen mit der Elektrik/Elektronik des Motors dienen. Der Anfang des Wickeldrahtes wird im nächsten Arbeitsschritt mit dem entsprechenden Kontakt kontaktiert. Dies kann z.B. eine Schweißung, Bondung, Lötung, Schneid-Klemm-Technik, usw. sein. Anschließend wird die erste Spule gewickelt durch Bewickeln des Spulenträgers 3, wobei die Spulenträgervorrichtung 1 um die Drehachse A rotiert.

Nach Fertigstellung der ersten Spule wird die Spulenträgervorrichtung 1 um ihre eigene Symmetrieachse B gedreht, bis sich der nächste zu bewickelnde Spulenträger 3 in der Wickelposition befindet. Dabei legt sich der Wickeldraht vom Ende der ersten Spule zum Anfang der zweiten Spule, um eine an der Spulenträgervorrichtung 1 bzw. an dem Spulenträger 3 angeformte Drahtführung 15 und stellt einen elektrischen Kurzschluss zwischen den beiden Spulen her. Die Bewicklung der zweiten Spule verläuft analog der ersten. Nach Fertigstellung der zweiten Spule wird das Drahtende analog dem Drahtanfang an der ersten Spule mit einem dafür vorgesehenen Kontakt leitend verbunden. Die weiteren Spulenpaare werden anschließend analog dem ersten Spulenpaar hergestellt. Alternativ können aber auch stets zwei diametral gegenüberliegende Spulenträger gleichzeitig bewickelt werden.

Nach Abschluss des Wickelprozesses wird die Spulenträgervorrichtung 1 an eine weitere Arbeitsstation übergeben. Dabei werden die bewickelten Spulenträger 3 um die am Trägerelement 1 angeformten Scharniere so weit gedreht, bis diese ihre endgültige Einbauposition erreicht haben und der Rückschlussring 17 aufgeschoben werden kann. Anschließend wird der komplette Stator elektrisch geprüft und zur weiteren Montage an eine folgende Arbeitsstation übergeben.

Das Wickelverfahren mit einem Flyer - Wickelautomat geschieht analog dem Verfahren als Linearwickler. Jedoch dient die Drehachse A nur zur Bestückung des Wickelautomats mit Spulenträgern. Im Gegensatz zum Linearwickler dreht sich der Draht um die Spule und nicht die Spule um den Draht.

## Patentansprüche

1. Spulenträgervorrichtung (2) für eine elektrische Maschine insbesondere für einen Elektromotor mit Spulenträgern (3) aus Kunststoff, auf denen Spulen des Stators wickelbar sind, **dadurch gekennzeichnet, dass** die Spulenträger (3) über Scharniere insbesondere Filmscharniere (4) am äußeren Rand eines mittigen Kunststoff-Trägerelements (1) angelenkt insbesondere angeformt sind.

2. Spulenträgervorrichtung nach Anspruch 1, **dadurch gekennzeichn et, dass** mindestens vier Spulenträger (3) am insbesondere flächigen Trägerelement (1) im noch nicht abgebogenen Zustand radial und sternförmig insbesondere punktsymmetrisch befestigt sind.

3. Spulenträgervorrichtung nach Anspruch 1 oder 2, **dadurch gekennzeichnet, dass** die Spulenträger (3) mit ihrem Kunststoff-Spulenträgerkern (8) länglich ausgeführt sind, wobei die Längsachse (9) der Spulenträger (3) im noch nicht abgebogenen Zustand radial zum Trägerelement (1) angeordnet ist.

4. Spulenträgervorrichtung nach einem der vorherigen Anspruch, **dadurch gekennzeichnet, dass** die Spulenträger (3) aus der Ebene des Trägerelements (1) heraus um das Filmscharnier (4) zur Vorder- und/oder Rückseite des Trägerelements (1) biegbar sind.

5. Spulenträgervorrichtung nach Anspruch 4, **dadurch gekennzeichnet, dass** die Spulenträger (3) in der umgebogenen abgewinkelten Stellung zueinander parallel und rechtwinklig zum Trägerelement (1) stehen.

6. Spulenträgervorrichtung nach einem der vorherigen Ansprüche, **dadurch gekennzeichnet, dass** nach dem Bewickeln aller Spulenträger (3) diese alle zu einer Seite des Trägerelements (1) rechtwinklig derart in die Arbeitsstellung umgebogen sind, dass die Spulen den Rotor und insbesondere ein Spaltrohr einer Spaltrohr-Motorpumpe außen umgeben.

7. Spulenträgervorrichtung nach einem der vorherigen Ansprüche, **dadurch gekennzeichnet, dass** jeder Spulenträger (3) eine rückwärtige Außenplatte (10) aus Kunststoff aufweist, die über das Filmscharnier (4) mit dem Trägerelement (1) verbunden und an der der Kunststoffkern (8) des Spulenträgers (3) angeformt ist.

8. Spulenträgervorrichtung nach Anspruch 7, **dadurch gekennzeichnet, dass** in der nicht abgewinkelten Stellung der Spulenträger (3) die Außenplatten (10) insbesondere im Wesentlichen in der Ebene des Trägerelements (1) liegen.

9. Spulenträgervorrichtung nach Anspruch 7 oder 8, **dadurch gekennzeichnet, dass** in der Außenplatte (10) und dem Kunststoffkern (8) eine Ausnehmung (11) für den Polschuh (6) ist.

10. Spulenträgervorrichtung nach einem der vorherigen Ansprüche, **dadurch gekennzeichnet, dass** im Trägerelement (1) eine mittige Öffnung (12) für die Maschinenwelle ist.

11. Spulenträgervorrichtung nach einem der vorherigen Ansprüche, **dadurch gekennzeichnet, dass** das Scharnier eine Schnappverbindung aufweist oder von einer Schnappverbindung gebildet ist.

12. Verfahren zum Bewickeln einer Spulenträgenrorrichtung nach einem der vorherigen Ansprüche, **dadurch gekennzeichnet, dass** nach Herstellung der Spulenträgervorrichtung (2) diese in einen Wickelautomat in der Weise eingesetzt wird, dass zumindest ein Spulenträger (3) gegenüber dem Trägerelement (1) um das Scharnier vorzugsweise um 90 Grad umgebogen wird, wobei der zu bewickelnde Kern (8) des Spulenträgers (3) nach außen ragt, und danach der Spulenträger (3) und dessen Kern (8) bewickelt wird.

13. Verfahren nach Anspruch 12, **dadurch gekennzeichnet, dass** vor dem Bewickeln die Polschuhe (15) in die Ausnehmungen (11) der Spulenträger eingesetzt werden.

14. Verfahren nach Anspruch 12 oder 13, **dadurch gekennzeichnet, dass** nach dem Bewickeln eines oder zweier einander diametral gegenüberliegender Spulenträger (3) die Spulenträgervorrichtung (2) um einen Winkel (β) gedreht wird, so dass danach ein nächster oder zwei nächste diametral gegenüberliegende Spulenträger (3) in der Bewicklungsstellung liegen, die um 90 Grad nach außen umgebogen worden sind.

15. Verfahren nach Anspruch 14, **dadurch gekennzeichnet, dass** während des Verdrehens der Spulenträgervorrichtung (2) der Wickeldraht von einer bewickelten Spule zum nächsten Spulenträger (3) geführt wird.

16. Verfahren nach Anspruch 15, **dadurch gekennzeichnet, dass** der Wickeldraht um eine Drahtführung (15) des Trägerelements (1) gelegt wird.

17. Verfahren nach einem der Ansprüche 12 bis 16 **dadurch gekennzeichnet, dass** nach dem Bewickeln eines, zwei oder mehrerer Spulenträger (3) die bewickelten Spulenträger (3) um 180 Grad nach innen um das jeweilige Scharnier (4) geschwenkt werden.

## Claims

1. Coil former apparatus (2) for an electrical machine, in particular for an electric motor having coil formers (3) composed of plastic, on which stator coils can be wound, **characterised in that** the coil formers (3) are articulated, in particular integrally formed, via hinges, in particular integral hinges (4), on the outer edge of a central plastic mounting element (1).

2. Coil former apparatus according to Claim 1, **characterised in that** at least four coil formers (3) are fastened, while not yet bent, in a radial and star-shaped, in particular point-symmetrical configuration to the, in particular planar, mounting element (1).

3. Coil former apparatus according to Claim 1 or 2, **characterised in that** the coil formers (3) with their plastic coil former core (8) have an oblong configuration, the longitudinal axis (9) of the coil formers (3) being disposed radially with respect to the mounting element (1) when the coil formers (3) have not yet been bent.

4. Coil former apparatus according to any one of the preceding claims, **characterised in that** the coil formers (3) can be bent out of the plane of the mounting element (1) about the integral hinges (4) towards the front and/or rear face of the mounting element (1).

5. Coil former apparatus according to Claim 4, **characterised in that** the coil formers (3) are disposed parallel to one another and at right angles to the mounting element (1) when in the bent, angled position.

6. Coil former apparatus according to any one of the preceding claims, **characterised in that**, after all the coil formers (3) have been wound, they are all bent to the working position at right angles to one side of the mounting element (1) in such a manner that the coils surround the rotor, and in particular a can of a canned motor pump, on the outside.

7. Coil former apparatus according to any one of the preceding claims, **characterised in that** each coil former (3) has a rear outer plate (10) made of plastic which is connected to the mounting element (1) via the integral hinge (4) and with which the plastic core (8) of the coil former (3) is formed integrally.

8. Coil former apparatus according to Claim 7, **characterised in that**, in the position in which the coil formers (3) are not bent, the outer plates (10) lie, in particular substantially, in the plane of the mounting element (1).

9. Coil former apparatus according to Claim 7 or 8, **characterised in that** an opening (11) for the pole piece (6) is arranged in the outer plate (10) and in the plastic core (8).

10. Coil former apparatus according to any one of the preceding claims, **characterised in that** a central opening (12) for the machine shaft is arranged in the mounting element (1).

11. Coil former apparatus according to any one of the preceding claims, **characterised in that** the hinge has a snap-in connection or is formed by a snap-in connection.

12. Method for winding a coil former apparatus according to any one of the preceding claims, **characterised in that** after the coil former apparatus (2) has been produced it is placed in an automatic winding machine in such a manner that at least one coil former (3) is bent about the hinge preferably through 90 degrees with respect to the mounting element (1), with the coil former core (8) to be wound projecting outwards, and the coil former (3) and its core (8) are then wound.

13. Method according to Claim 12, **characterised in that**, prior to the winding, the pole pieces (15) are inserted in the openings (11) of the coil formers.

14. Method according to Claim 12 or 13, **characterised in that**, after the winding of one or two diametrically opposite coil formers (3), the coil former apparatus (2) is rotated through an angle (β) such that one next or two next diametrically opposite coil formers (3), which have been bent outwards through 90 degrees, are then in the winding position.

15. Method according to Claim 14, **characterised in that** during the rotation of the coil former apparatus (2) the winding wire is guided from a wound coil to the next coil former (3).

16. Method according to Claim 15, **characterised in that** the winding wire is placed around a wire guide (15) of the mounting element (1).

17. Method according to any one of Claims 12 to 16, **characterised in that,** after the winding of one, two or a plurality of coil formers (3), the wound coil formers (3) are swivelled inwards through 180 degrees about the respective hinge (4).

## Revendications

1. Dispositif porte-bobines (2) pour une machine électrique, en particulier pour un moteur électrique comprenant des porte-bobines (3) en matière plastique, sur lesquels sont enroulables des bobines du stator, **caractérisé en ce que** les porte-bobines (3) sont articulés, en particulier conformés, sur des charnières, en particulier des charnières pelliculaires (4), au bord extérieur d'un élément support central (1) en matière plastique.

2. Dispositif porte-bobines suivant la revendication 1, **caractérisé en ce qu'**au moins quatre porte-bobines (3) sont fixés radialement et en étoile, en particulier selon une symétrie ponctuelle, sur l'élément support (1), en particulier plan, à l'état non encore replié.

3. Dispositif porte-bobines suivant l'une des revendications 1 et 2, **caractérisé en ce que** les porte-bobines (3) sont réalisés de manière allongée avec leur noyau de porte-bobines (8) en matière plastique, l'axe longitudinal (9) des porte-bobines (3) étant disposé radialement par rapport à l'élément support (1) à l'état non encore replié .

4. Dispositif porte-bobines suivant l'une des revendications précédentes, **caractérisé en ce que** les porte-bobines (3) sont pliables hors du plan de l'élément support (1) autour de la charnière pelliculaire (4) vers côté avant et/ou arrière de l'élément support (1).

5. Dispositif porte-bobines suivant la revendication 4, **caractérisé en ce que** les porte-bobines (3) dans la position repliée coudée sont parallèles entre eux et à angle droit par rapport à l'élément support (1).

6. Dispositif porte-bobines suivant l'une des revendications précédentes, **caractérisé en ce que**, après l'enroulement de tous les porte-bobines (3), ceux-ci sont tous repliés à angle droit dans la position de travail d'un côté de l'élément support (1), de telle sorte que les bobines entourent extérieurement le rotor et en particulier une gaine d'une pompe à moteur à gaine.

7. Dispositif porte-bobines suivant l'une des revendications précédentes, **caractérisé en ce que** chaque porte-bobines (3) présente une plaque extérieure arrière (10) en matière plastique qui est reliée par l'intermédiaire de la charnière pelliculaire (4) avec l'élément support (1) et sur laquelle est conformé le noyau de matière plastique (8) du porte-bobines (3).

8. Dispositif porte-bobines suivant la revendication 7, **caractérisé en ce que,** dans la position non coudée des porte-bobines (3), les plaques extérieures (10) se situent en particulier essentiellement dans le plan de l'élément support (1).

9. Dispositif porte-bobines suivant l'une des revendications 7 et 8, **caractérisé en ce qu'**un évidement (11) pour l'épanouissement polaire (6) se trouve dans la plaque extérieure (10) et dans le noyau de matière plastique (8).

10. Dispositif porte-bobines suivant l'une des revendications précédentes, **caractérisé en ce qu'**une ouverture centrale (12) pour l'arbre de la machine se trouve dans l'élément support (1).

11. Dispositif porte-bobines suivant l'une des revendications précédentes, **caractérisé en ce que** la charnière présente une liaison à encliquetage ou est formée par une liaison à encliquetage.

12. Procédé d'enroulement d'un dispositif porte-bobines suivant l'une des revendications précédentes, **caractérisé en ce que**, après la fabrication du dispositif porte-bobines (2), celui-ci est mis en place dans un automate de bobinage de manière qu'au moins un porte-bobines (3) soit replié de préférence de 90° autour de là charnière par rapport à l'élément support (1), le noyau à enrouler (8) du porte-bobines (3) dépassant alors vers l'extérieur, puis la porte-bobines (3) et son noyau (8) étant enroulés.

13. Procédé suivant la revendication 12, **caractérisé en ce que** les épanouissements polaires (15) sont mis en place dans les creux (11) des porte-bobines avant l'enroulement.

14. Procédé suivant l'une des revendications 12 et 13, **caractérisé en ce que**, après l'enroulement d'un ou de deux porte-bobines (3) diamétralement opposés, le dispositif porte-bobines (2) est pivoté d'un angle (β), de sorte qu'un porte-bobines suivant ou deux porte-bobines suivants (3) diamétralement opposés, qui sont repliés vers l'extérieur de 90°, sont dans la position d'enroulement.

15. Procédé suivant la revendication 14, **caractérisé en ce que,** pendant la rotation du dispositif porte-bobines (2), le fil de bobinage est guidé d'une bobine enroulée au porte-bobines (3) suivant.

16. Procédé suivant la revendication 15, **caractérisé en ce que** le fil de bobinage est placé autour d'un guide-fil (15) de l'élément support (1).

17. Procédé suivant l'une des revendications 12 à 16, **caractérisé en ce que**, après l'enroulement d'un, de deux ou de plusieurs porte-bobines (3), les porte-bobines (3) enroulés sont animés d'un mouvement de pivotement de 180° vers l'intérieur autour de la charnière respective (4).
